# EUROPEAN PATENT SPECIFICATION

(11) **EP 2 754 278 B1**
(45) Date of publication and mention of the grant of the patent: **25.09.2019**
(21) Application number: 12736044.4
(22) Date of filing: 11.07.2012
(51) Int. Cl.: H04L 29/06, G06F 21/00, H04L 12/24

(54) **SYSTEM AND METHOD FOR SUPPORTING AT LEAST ONE OF SUBNET MANAGEMENT PACKET (SMP) FIREWALL RESTRICTIONS AND TRAFFIC PROTECTION IN A MIDDLEWARE MACHINE ENVIRONMENT**
SYSTEM UND METHODE ZUR UNTERSTÜTZUNG VON MINDESTENS EINES SUBNETZWERKPAKETS (SMP) FÜR EINE FIREWALLRESTRIKTION UND VERKEHRSSICHERHEIT IN EINER MIDDLEWARE MASCHINE
SYSTÈME ET PROCÉDÉ POUR PRENDRE EN CHARGE AU MOINS UNE OU PLUSIEURS RESTRICTIONS DE PARE-FEU DE PAQUET DE GESTION DE SOUS-RÉSEAU (SMP) ET UNE PROTECTION DE TRAFIC DANS UN ENVIRONNEMENT DE MACHINE INTERLOGICIELLE

(30) Priority: 11.07.2011 US 201161506557 P; 10.05.2012 US 201261645517 P; 10.07.2012 US 201213545803; 10.07.2012 US 201213545796
(43) Date of publication of application: 16.07.2014
(73) Proprietor: Oracle International Corporation, Redwood Shores, California 94065 (US)
(72) Inventor: JOHNSEN, Bjorn-Dag, 0687 Oslo (NO); ARNTSEN, Roy, 0687 Oslo (NO); HUSE, Lars Paul, 1415 Oppegard (NO); BREAN, David, Boston, Massachusetts 02122 (US); TORUDBAKKEN, Ola, 0671 Oslo (NO)
(74) Representative: D Young & Co LLP
(86) International application number: PCT/US2012/046219
(87) International publication number: WO 2013/009846

(56) References cited:
- US-A1- 2004 123 142
- US-B1- 7 113 995
- MANHEE LEE ET AL: "Security Enhancement in InfiniBand Architecture", PARALLEL AND DISTRIBUTED PROCESSING SYMPOSIUM, 2005. PROCEEDINGS. 19TH IEEE INTERNATIONAL DENVER, CO, USA 04-08 APRIL 2005, PISCATAWAY, NJ, USA,IEEE, 4 April 2005 (2005-04-04), pages 105a-105a, XP010785600, DOI: 10.1109/IPDPS.2005.396 ISBN: 978-0-7695-2312-5
- "Sun InfiniBand Dual Port 4x QDR PCIe ExpressModule and Low Profile Host Channel Adapters M2 Frequently Asked Questions", , 21 September 2010 (2010-09-21), XP055037781, Retrieved from the Internet: URL:http://www.oracle.com/us/products/serv ers-storage/networking/infiniband/sun-qdr- ib-hcas-faq-172841.pdf [retrieved on 2012-09-11]
- Rev 0 10: "4.5U 4X SDR/DDR InfiniBand Switch Platform User's Manual", , 1 January 2007 (2007-01-01), XP055327367, Retrieved from the Internet: URL:http://www.colfaxdirect.com/store/pc/c atalog/14u_ib_switch_system_user_manual_0_ 10.pdf [retrieved on 2016-12-08]

## Description

### Field of Invention:

The present invention is generally related to computer systems and software such as middleware, and is particularly related to supporting a middleware machine environment.

### Background:

The interconnection network plays a beneficial role in the next generation of super computers, clusters, and data centers. High performance network technology, such as the InfiniBand (IB) technology, is replacing proprietary or low-performance solutions in the high performance computing domain, where high bandwidth and low latency are the key requirements. For example, IB installations are used in supercomputers such as Los Alamos National Laboratory's Roadrunner, Texas Advanced Computing Center's Ranger, and Forschungszcntrum Juelich's JuRoPa.

IB was first standardized in October 2000 as a merge of two older technologies called Future I/O and Next Generation I/O. Due to its low latency, high bandwidth, and efficient utilization of host-side processing resources, it has been gaining acceptance within the High Performance Computing (HPC) community as a solution to build large and scalable computer clusters. The de facto system software for IB is OpenFabrics Enterprise Distribution (OFED), which is developed by dedicated professionals and maintained by the OpenFabrics Alliance. OFED is open source and is available for both GNU/Linux and Microsoft Windows.

US 7113995 discloses a method in a node for managing authorized attempts to access the node. A packet is received from a source, wherein the packet includes a first key. A determination is made as to whether the first key matches a second key for the node. The packet is dropped without a response to the source if the first key does not match the second key. Information from the packet is stored in response to this absence of a match. The information is sent to a selected recipient in response to a selected event, which may be, for example, either immediately or in response to polling to see if the information is present.

"Security Enhancement in InfiniBand Archictecture" by Lee et al, Parallel and Distributed Processing Symposium, 2005, ISBN 978-0-7695-2312-5, discloses that the InfiniBandTM Architecture (IBA) is a new promising I/O communication standard positioned for building clusters and System Area Networks (SANs). For better availability of IBA, it is recommended that a switch be able to enforce partitioning for data packets, for which an efficient implementation method using trap messages is proposed. Only secret keys are encrypted to minimize performance degradation. A new authentication mechanism is disclosed that treats the Invariant CRC (ICRC) field as an authentication tag.

"Sun InfiniBand Dual Port 4x QDR PCIe ExpressModule and Low Profile Host Channel Adapters M2 Frequently Asked Questions", September 2010, XP 55037781 describe_Quad Data Rate (QDR) InfiniBand (IB) Host Channel Adapters (HCAs) that provides the high price/performance for both throughput and low latency for servers, with eight lanes of either low-profile PCIe or modular hot-pluggable PCIe ExpressModule form factors.

Flextronics 14.5U 4X SDR/DDR InfiniBand Switch Platform User's Manual describes out-of-band management of the switch system via embedded management tools which are based on the I2C interface of the switch system, wherein the tools can be run from an embedded card installed in the switch to enable basic chassis management, such as monitoring temperature, and performing firmware management, such as querying for a GUID.

### Summary:

The invention is defined in the appended claims.

Described herein are systems and methods for providing subnet management packet (SMP) firewall restrictions in a middleware machine environment. A secure firmware implementation can be provided on a host channel adaptor (HCA), wherein the HCA is associated with a host in the middleware machine environment. The secure firmware implementation operates to receive at least one SMP from the host or destined to the host, and prevent the host from sending or receiving the at least one SMP. Furthermore, the secure firmware implementation includes a proxy function that can communicate with external management components on behalf of the host. The subnet manager send SMPs to the host software via the proxy function

### Brief Description of the Figures:

**Figure 1** shows an illustration of supporting a management key protection model in a middleware machine platform, in accordance with an embodiment of the invention.
**Figure 2** shows an illustration of providing SMP firewall restrictions in a middleware machine environment, in accordance with an embodiment of the invention.
**Figure 3** illustrates an exemplary flow chart for providing SMP firewall restrictions in a middleware machine environment, in accordance with an embodiment of the invention.
**Figure 4** shows an illustration of providing switch based SMP traffic protection in a middleware machine environment, in accordance with an embodiment of the invention.
**Figure 5** illustrates an exemplary flow chart for providing switch based SMP traffic protection in a middleware machine environment, in accordance with an embodiment of the invention.

### Detailed Description:

Described herein is a system and method for providing a middleware machine or similar platform. In accordance with an embodiment of the invention, the system comprises a combination of high performance hardware, e.g. 64-bit processor technology, high performance large memory, and redundant InfiniBand and Ethernet networking, together with an application server or middleware environment, such as WebLogic Suite, to provide a complete Java EE application server complex which includes a massively parallel in-memory grid, that can be provisioned quickly, and can scale on demand. In accordance with an embodiment, the system can be deployed as a full, half, or quarter rack, or other configuration, that provides an application server grid, storage area network, and InfiniBand (IB) network. The middleware machine software can provide application server, middleware and other functionality such as, for example, WebLogic Server, JRockit or Hotspot JVM, Oracle Linux or Solaris, and Oracle VM. In accordance with an embodiment, the system can include a plurality of compute nodes, IB switch gateway, and storage nodes or units, communicating with one another via an IB network. When implemented as a rack configuration, unused portions of the rack can be left empty or occupied by fillers.

In accordance with an embodiment of the invention, referred to herein as "Sun Oracle Exalogic" or "Exalogic", the system is an easy-to-deploy solution for hosting middleware or application server software, such as the Oracle Middleware SW suite, or WebLogic. As described herein, in accordance with an embodiment the system is a "grid in a box" that comprises one or more servers, storage units, an IB fabric for storage networking, and all the other components required to host a middleware application. Significant performance can be delivered for all types of middleware applications by leveraging a massively parallel grid architecture using, e.g. Real Application Clusters and Exalogic Open storage. The system delivers improved performance with linear I/O scalability, is simple to use and manage, and delivers mission-critical availability and reliability.

### M_Key protection model

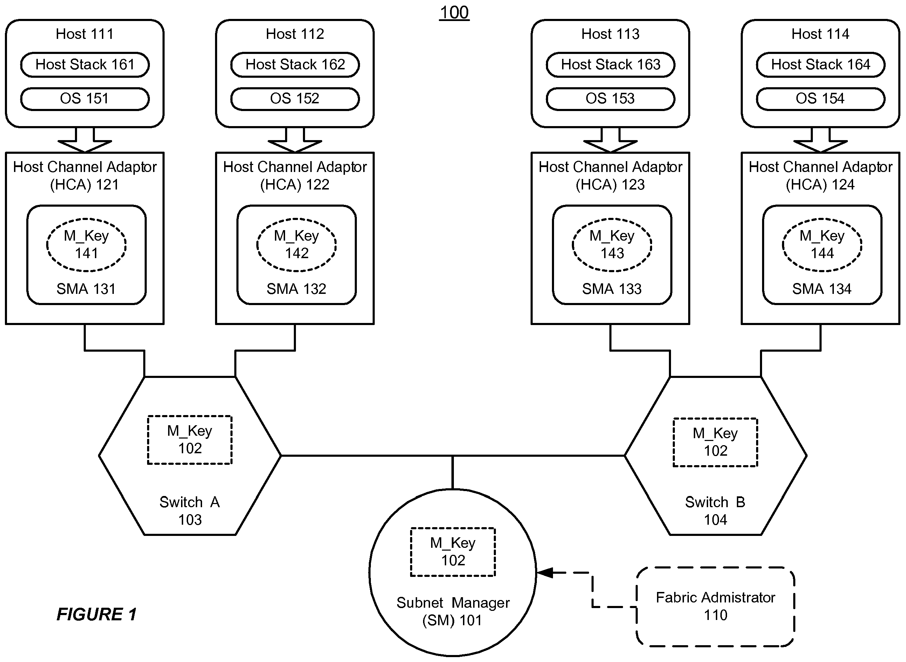

**Figure 1** shows an illustration of supporting a management key protection model in a middleware machine platform, in accordance with an embodiment of the invention. As shown in Figure 1, a management key, such as an M_Key 102, can be used to protect an IB fabric (or an IB subnet) 100. The values for the M_Key 102 may only be known by fabric administrators 110, which can have administrator access to the switches 103-104 and the designated subnet manager (SM) nodes 101 in the IB subnet/fabric 100. The integrity of the M_Key(s) 102 depends on the integrity of the fabric level administration passwords used by the fabric administrators 110, as well as the physical access protection of the switches 103-104 in the IB subnet/fabric 100, e.g. in a data center.

In the IB fabric 100, a secure HCA firmware implementation in HCA 121-124 can keep the type and identity of various fabric nodes well defined. Each of the HCA121-124 can implement a subnet management agent (SMA) component 131-134, each of which can be associated with an M_Key 141-144. Furthermore, the connected switches A-B 103-104 can be controlled by the fabric administrator 110. Thus, any rogue SMA implementation 131-134 may not compromise the fabric administrator 110 defined M_Key 102 values that are used in the IB subnet/fabric 100.

Additional descriptions of various embodiments of using secure HCA firmware implementation in a middleware machine platform are provided in U.S. Patent Application 13/487,973, entitled "SYSTEM AND METHOD FOR PROVIDING SECURE SUBNET MANAGEMENT AGENT (SMA) IN AN INFINIBAND (IB) NETWORK", filed June 4, 2012.

Furthermore, the fabric administrator 110 can ensure that new M_Key values 102 for the IB subnet/fabric 100 are installed out-of-band on switches 103-104 (as well as for the relevant subnet manager instances 101). Additionally, the fabric administrator 110 can ensure that there is infinite M_Key 102 lease time on the switches 103-104. Thus, the host based software 161-164, e.g. a host based subnet manager on different hosts 111-114 (including an operating system 151-154), can not hijack the control of any switch 103-104 in the IB subnet/fabric 100.

In accordance with an embodiment of the invention, a single M_Key 102 value (or a single set of M_Key values) can be used for various nodes in the IB subnet/fabric 100 based on the IB specification defined access restrictions. The correct value for a current M_Key 102 may need to be specified before either reading or updating the M_Key 102, since the secure HCA firmware can ensure that the "read protected" M_Key assigned to the local HCA 121-124 is not exposed to local host based software.

Additionally, local software 161-164 on different hosts 111-114 may be able to hi-jack the HCA port by setting up its own M_Key value, in the case when the current M_Key value for HCA ports is defined at run-time. Also, the host local software 161-164 may make the HCA port un-manageable for the designated subnet manager 101, e.g., before the designated subnet manager 101 sets up any M_Key 102 for the HCA 121-124.

In accordance with an embodiment of the invention, a designated subnet manager 101 can ignore any HCA ports with un-known M_Key value and leave the corresponding link not initialized. The only impact of a hijacked HCA port M_Key can be that the HCA port may not be operational, and the designated subnet manager 101 can prevent host based software from communicating via this HCA port using normal communication, i.e. non-SMP/VL15 based communication.

Furthermore, when host software 111-114 compromises the local HCA M_Key value, the offending host software may be able to bring the HCA port to an operational state with activated local identifiers (LIDs) and partition membership. In such a case, if the switch port on a switch 103-104 that connects to the HCA 121-124 is controlled by a different M_Key value that is not known to the host software 111-114 that has compromised the local HCA M_Key value, then the offending host software 111-114 may not be able to bring the link to a full operational state that allows normal data traffic.

In accordance with an embodiment of the invention, the IB fabric 100 can prevent direct route SMPs between the various hosts 111-114 in order to avoid various potentially threatening scenarios. In one scenario, a host, e.g. host 111, can use the direct route SMPs to hijack the M_Key of the HCA port on a remote host, e.g. 112, after the remote host 112 and/or the remote HCA 122 are reset. This can cause the remote HCA 122 port to become inaccessible from the SM 101 and thereby prevent the remote host 112 from participating in normal IB communication, i.e. a denial of service (DoS) attack. In another scenario, when two hosts, e.g. host 111 and host 114, are compromised by hackers, the cooperating administration in the IB fabric 100 that depends on direct route SMPs may allow the two compromised hosts to exchange information using direct route SMPs.

The IB fabric 100 can support the cooperating administration for exchanging information between different hosts 111-114 without depending on direct route SMPs. For example, the administrators for the hosts can access a shared web-page on the Internet instead of relying on direct route SMPs in the IB fabric 100. From a fabric security perspective, leaving direct route SMPs as a security hole on the IB fabric may be considered a worse situation than allowing both host administrators to access a shared web-page on the Internet.

In accordance with an embodiment of the invention, the HCA ports may be set up with finite lease time on M_Keys 102, e.g. due to a high availability concern with the subnet manager(s) 101 that maintains the M_Key 102 lease period. Thus, the M_Keys 102 can expire without the associated link going down. Consequently, the state of the HCA 121-124, e.g. the partition membership, may be updated while links are still in active mode and the LID routes for the involved port are still operational. Then, the IB fabric 100 without M_Key protection may mistakenly allow normal IB traffic between a hi-jacked host and the hosts in other partitions.

Furthermore, if the M_Keys 102 expire before the links going down, both the local HCA, e.g. HCA 121, and any remote HCA, e.g. HCA 124, may be hi-jacked and the partition membership may be modified. If the associated switch ports, e.g. on switches 103-104, are not set up to perform partition enforcement, then the traffic with non-solicited partition membership can reach any other node in the fabric.

Additionally, a subnet manager 101 within the IB fabric 100 can depend on a designated virtual lane (VL), e.g. the VL15 buffering, in order to correctly monitor and control the IB fabric 100 and negotiate with other subnet managers in the IB fabric 100. Since the VL15 buffering within the IB fabric 100 is a shared resource, the uncontrolled use of SMPs from any host can represent a DoS attack. This can affect subnet manager 101 operations, since the M_Key protection within the IB fabric 100 may prevent the hosts from changing any SMA state on any node. Thus, there is a need to provide SMP traffic protection in the IB fabric 100.

In accordance with an embodiment of the invention, the M_Key 102 can be created and managed by fabric administrators 110 and stored in secured memory on switches A-B 103-104 and/or HCAs121-124. A microprocessor on a switch A-B 103-104 or a HCA121-124 can access the memory for reading out the M_Key 102 or writing the M_Key 102 into the memory.

### SMP firewall restrictions

In accordance with an embodiment of the invention, a secure HCA firmware can use SMP firewall restrictions to prevent host based software from hijacking either local or remote HCA ports. The SMP firewall restrictions can prevent host software from sending out SMP requests on the fabric and can reject any SMP that would otherwise be forwarded to the host software.

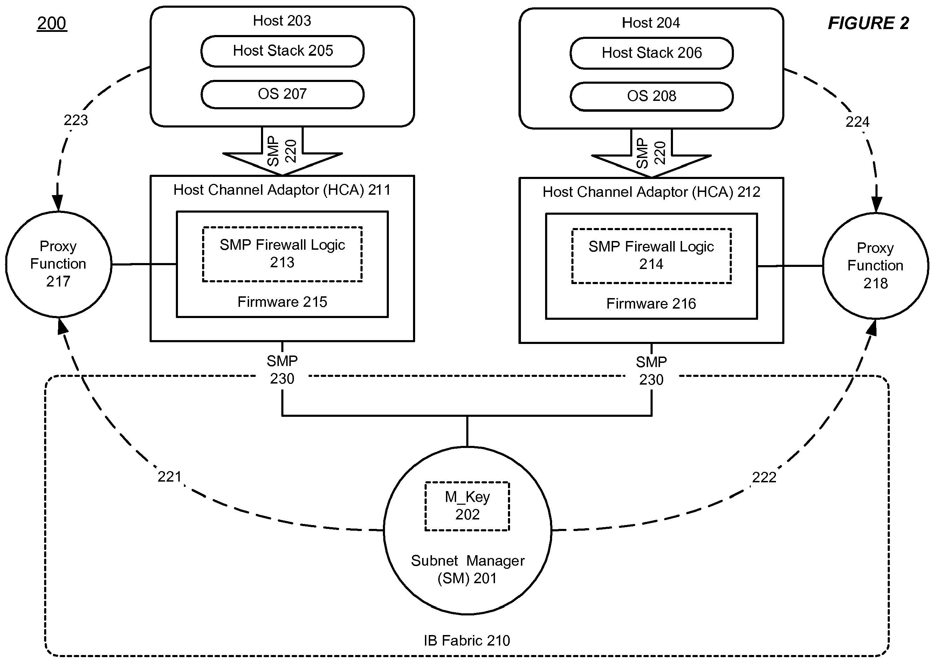

**Figure 2** shows an illustration of providing SMP firewall restrictions in a middleware machine environment, in accordance with an embodiment of the invention. As shown in Figure 2, a middleware machine environment 200 can comprise one or more hosts 203-204 and an IB fabric 210 associated with a subnet manager 201. Each host 203-204 connects to the IB fabric 210 via a HCA 211-212, which implements a HCA firmware 215-216.

The HCA firmware 215-216 can include SMP firewall component 213-214 that can effectively prevent any SMP based denial of service (DoS) attack, e.g. targeting the operations of the subnet manager 201, and allow legal use of SMP based tools from trusted nodes in the fabric 200. The HCA SMP firewall component 213-214 can prevent the host stack software 205-206 from sending a SMP 220 onto the IB fabric 210. Furthermore, in order to prevent the information of a remote node, e.g. host 204, from being illegally provided to local host software, e.g. host software 205, the secure HCA firmware 215 can reject the SMPs 230 received from the IB fabric 210 that would otherwise be forwarded to host software 205.

Additionally, the SMP firewall component 213-214 can prevent various SMP based operations by host stack software 205-206, e.g., observing the identity of the locally connected switch ports when the subnet manager 201 is not operational. Furthermore, any SMP based communication with host stack software 205-206 from the subnet manager 201 or other legitimate components in the fabric can be prevented.

In accordance with an embodiment of the invention, the secure HCA firmware 215-216 can implement specific rules as part of the SMP firewall component 213-214, in order to ensure that legitimate operations are enabled for the host stack software 205-206. These rules allow specific SMP based request and response types to be sent and received at a tightly controlled rate. Furthermore, these rules can define source and destination restrictions for both direct route and LID route SMPs.

Additionally, these rules can allow SMP based authentication of the OS 207 and 208 or Hypervisor instance that is currently controlling the physical hosts 203 and 204 that are associated with HCA instance 211-212. Further descriptions of various embodiments of authenticating discovered components in a middleware machine platform are provided in U.S. Patent Application 13/488,040, entitled "SYSTEM AND METHOD FOR AUTHENTICATING IDENTITY OF DISCOVERED COMPONENT IN AN INFINIBAND (IB) NETWORK", filed June 4, 2012.

In accordance with an embodiment of the invention, the secure HCA firmware 215 can implement a proxy function 217-218, in order to ensure that legitimate operations are enabled for the host stack software 205-206. External management components, such as the subnet manager 201, can send vendor SMPs 221 to the host stack software 205-206 via the proxy functions 217-218.The host stack software 205-206 can communicate with the proxy functions 217-218 via local out of band interfaces 223-224 between the HCA firmware 215-216 and the host stack software 205-206. This proxy function 217-218 can then be responsible for implementing specific legal operations on behalf of the host stack software 205-206, and be responsible for communicating with the host stack software 205-206 on behalf of the remote fabric management components, e.g. the subnet manager 201.

The secure HCA firmware 215-216 can protect the IB fabric 210 from un-authorized retrieval of configuration information, e.g. preventing local host software from observing information about remote IB nodes such as globally unique identifiers (GUIDs), LIDs and partition membership that can potentially be used as a basis for DOS attacks against the remote IB node. Also, the secure HCA firmware 215-216 allows a local HCA 211-212 to adequately protect its local M_Key 202 setting from local host access, by restricting the ability to observe information about remote nodes that can be used to enable normal data communication to the remote node behind the back of the active subnet manager.

Additionally, the secure HCA firmware 215-216 may prevent the legacy SMP based diagnostics and monitoring tools from being used (or may not work) from an un-trusted host, since the secure HCA can block any SMP operations sent from an un-trusted host. Also, an M_Key scheme can be used with complete read protection, which may limit the ability of use legacy tools depending on SMPs.

Furthermore, the secure HCA firmware 215 can protect the IB fabric 200 from un-authorized SMP based communication between un-trusted hosts. The secure HCA firmware 215 can protect the IB fabric 210 from un-authorized SMP traffic that can be vulnerable to DoS attacks, e.g. targeting the SM 201 operations. Various admission control policies can restrict the SMP injection rates for different hosts 203-204 to an acceptable level. Alternatively, single subnet configurations can block all SMP operations from un-trusted hosts, e.g., utilizing the SMP block feature in the secure HCA firmware, in order to further prevent the DOS attacks.

Additionally, the secure HCA firmware 215 can protect the IB fabric 210 from DoS attacks targeting subnet administrator (SA) access. The secure HCA firmware 215 can guarantee the QoS/fairness and the scalability for accessing the SA. Also, in order to provide DoS protection, the SM 201 can be allowed to shut down HCA ports that are generating "overload" of SA requests, e.g. exceeding request rate thresholds for certain time intervals.

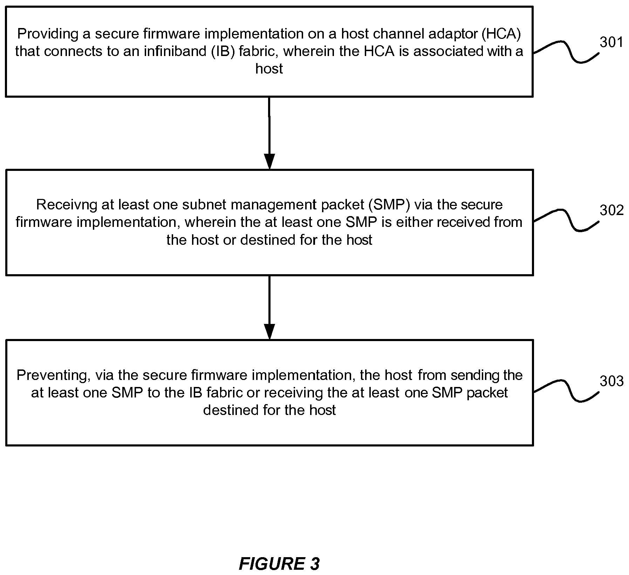

**Figure 3** illustrates an exemplary flow chart for providing SMP firewall restrictions in a middleware machine environment, in accordance with an embodiment of the invention. As shown in Figure 3, at step 301, a secure firmware implementation can be provided on a host channel adaptor (HCA) that connects to an infiniband (IB) fabric, wherein the HCA is associated with a host. Then, at step 302, the secure firmware implementation can receive at least one SMP, wherein the at least one SMP is either received from the host or destined for the host. Additionally, at step 303, the secure firmware implementation can prevent the host from sending the at least one SMP to the IB fabric or receiving the at least one SMP destined for the host.

### Switch based proxy M_key protection

In accordance with an embodiment of the invention, M_Key checking of SMPs can be performed in intermediate switch nodes in an IB fabric to ensure that the local switch M_Key setting can protect remote HCA ports that do not have an M_Key set up.

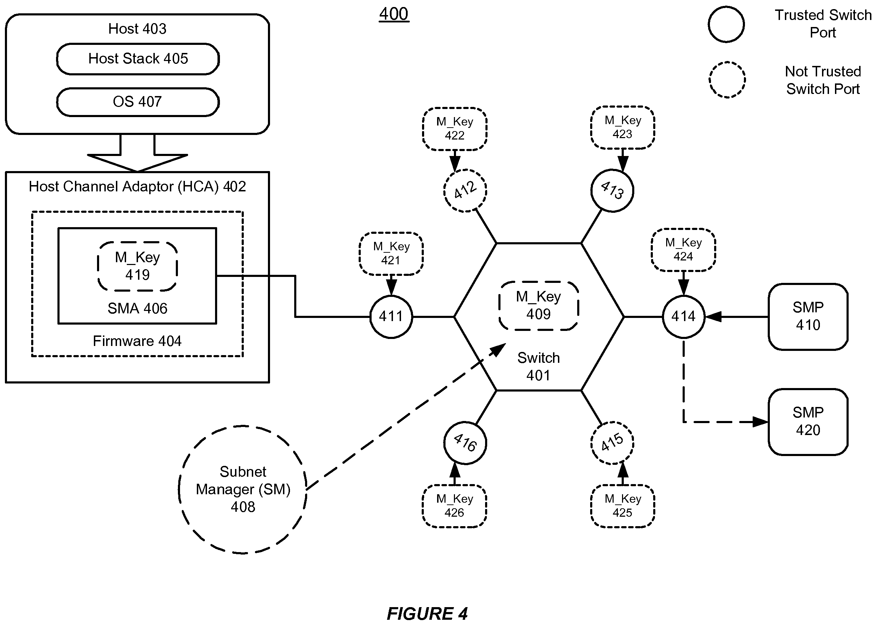

**Figure 4** shows an illustration of providing switch based SMP traffic protection in a middleware machine environment, in accordance with an embodiment of the invention. As shown in Figure 4, a middleware machine environment 400 can comprise an IB switch 401 that connects to a host 403 via a HCA 402. The host 403 can include a host stack software 405 running on top of an operating system 407. The IB switch 401 can include one or more switch ports 411-416, each of which can be used for connecting with separate nodes or entities in the IB fabric 400, e.g. switch port 411 is connected with the HCA 402.

A subnet management agent (SMA) component 406, which is implemented in firmware 404 on the HCA 402, can communicate with other nodes in the IB fabric 400 via the switch port 411. Also, the designated subnet manager 408 in the IB fabric 400 can use a particular switch port, e.g. port 411, for both sending direct route SMP requests to any SMA 406 and receiving direct route SMP responses from the SMA 406.

The switch 401 can prevent un-intended SMP traffic occurring in the IB fabric 400, without depending on requiring all HCAs to have trusted firmware with SMP control. For example, the switch 401 can filter direct route SMP traffic that is not consistent with a fabric policy for the IB fabric 400.

The switch 401 can use a filtering scheme to prevent a remote HCA port 402 from being hijacked by an intruder. The filtering scheme can be based on identifying any direct route SMP request that targets setting an SMA 406 attribute. Additionally, the filtering scheme can perform the same M_Key check for all direct route SMP requests independently of the destination, and may require that the direct route SMP requests include the correct M_Key 409 for the local switch 401 independently of which destination the SMP is targeting.

A single M_Key 409 can be used in an IB fabric 400, which includes the switch 401 and the HCA ports 402 that directly connects to the switch 401. If the host stack software 405 is able to compromise the M_Key 419 that protects the local HCA 402, then the host stack software 405 may also compromise the M_Key 409 protecting the local switch 401, since all SMP traffic in the IB fabric 400 includes the local switch M_Key 409.

In accordance with an embodiment of the invention, the switch 401 implementation can specify an optional M_Key value for each external port, e.g. M_Keys 421-426 for external ports 411-416. Additionally, the switch 401 implementation can ensure that any SMP sent out from a switch port, e.g. switch port 411, and any SMP received from this port all have an M_Key value that matches the M_Key 421 specified for the switch port 411. Furthermore, the network switch 401 can enforce separate restrictions on SMPs 420 sending from an external port 414 and SMPs 410 receiving at the external port 414.

Using this mechanism, a legitimate subnet manager 408 can ensure that all potentially untrusted remote HCA ports or other potentially untrusted remote ports may only be allowed to send out SMPs, when the correct local M_Key associated with a switch port is specified. Also, attempts to access a remote port may need to have the subnet manager 408 defined M_Key for that port independently of whether the remote port M_Key has been hi-jacked or not. Additionally, this mechanism can also specify an SMP rate that defines how fast the remote port can generate SMP, in order to prevent or reduce the chance of SMP based DoS attacks from an untrusted port in the fabric.

Additional descriptions of various embodiments of using SMP filtering in a middleware machine platform are provided in U.S. Patent No. 7,398,394, entitled "SYSTEM AND METHOD FOR AUTHENTICATING NODES IN A COMMUNICATION NETWORK", filed Jun 2, 2004 and issued July 8, 2008.

In accordance with an embodiment of the invention, a filtering scheme can prevent illegal host-host based direct route SMP traffic based on declaring the switch ports as either "trusted" or "not trusted." The determination of whether a switch port, or the entity connecting to the switch port, is trusted or not can be based on either explicit policy input to the local switch 401, or automatic authentication of the remote port.

As shown in Figure 4, the switch ports 411, 413-414, and 416 are trusted switch ports, while the switch ports 412 and 415 are not trusted. The filtering scheme may only allow SMP requests to be sent from the trusted ports (egress from the switch), and SMP responses to be received by the trusted ports (ingress to the switch). Additionally, only SMA requests, which have entered the subnet from a trusted port in the first place, may be allowed for egress to un-trusted ports. Thus, the filtering scheme can be made independent of any current M_Key setting, and can also be used together with the above M_Key based filtering scheme.

In accordance with an embodiment of the invention, the ability to use a single M_Key 409, or a single set of M_Keys, throughout an IB subnet/fabric 400 depends on whether all nodes in the IB fabric 400 are trusted and do not expose the M_Key in use to any entity that does not have the required privileges. A pre-requisite for a subnet manager 408 to include the current M_Key in a request is that the subnet manager 408 can be assured that the target and any intermediate agent may not compromise the integrity of the M_Key. In one example, such trustfulness can be established prior to including the current M_Key in any SMP. Thus, the fabric configurations may require all nodes in the IB fabric, including the HCAs, to be authenticated (or declared) as trusted before any M_Key based communication can takes place, instead of assuming that all SMA instances are trustful a priori.

In accordance with an embodiment of the invention, a mechanism for sending and receiving vendor based SMPs via the switch management interface can be provided. Such a mechanism enables a switch embedded authentication mechanism to operate as part of the switch local software and thereby operate in concert with embedded subnet managers and the embedded switch driver and SMA stack.

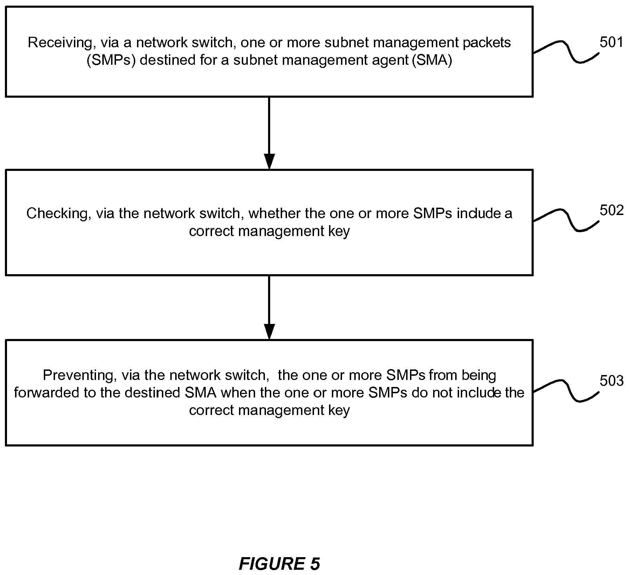

**Figure 5** illustrates an exemplary flow chart for providing switch based SMP traffic protection in a middleware machine environment, in accordance with an embodiment of the invention. As shown in Figure 5, at step 501, a network switch can receive one or more SMPs destined for a subnet management agent (SMA). Then, at step 502, the network switch can check whether the one or more SMPs include a correct management key. Additionally, at step 503, the network switch can prevent the one or more SMPs from being forwarded to the destined SMA when the one or more SMPs do not include the correct management key.

In general, the invention relates to a system for providing subnet management packet (SMP) firewall restrictions in a middleware machine environment operable on one or more microprocessors, comprising:
means for providing a secure firmware implementation on a host channel adaptor (HCA) that connects to an infiniband (IB) fabric, wherein the HCA is associated with a host;
means for receiving at least one SMP via the secure firmware implementation, wherein the at least one SMP is either received from the host or destined for the host; and
means for preventing, via the secure firmware implementation, the host from sending the at least one SMP to the IB fabric or receiving the at least one SMP destined for the host.

Said system further comprises means for including SMP firewall component in the secure firmware implementation.

Said system further comprises means for allowing the SMP firewall component to prevent one or more SMP based operations.

Said system further comprises means for allowing the SMP firewall component to prevent SMP based communication between host software and a subnet manager.

Said system further comprises means for implementing special rules as part of the SMP firewall component.

Said system further comprises means for allowing the special rules to define that specific SMP based request and response types are sent and received with a tightly controlled rate, and/or define source and destination restrictions for both direct route SMPs and local identifier route SMPs.

Said system further comprises means for allowing the secure firmware implementation to include a proxy function, wherein the proxy function can receive communications with the host software through a local out of band interface.

Said system further comprises means for allowing a subnet manger to send SMPs to the host software via the proxy function.

Said system further comprises means for preventing un-authorized retrieval of configuration information from remote IB nodes.

Said system further comprises means for allowing a subnet manger to shut down HCA ports that are generating overload of subnet administrator (SA) requests.

In general, the invention relates to a method for preventing subnet management packet (SMP) based attacks, comprising:
receiving at least one SMP via the secure firmware implementation, wherein the at least one SMP is either received from a host or destined for a host; and
preventing, via the secure firmware implementation, the host from sending the at least one SMP to an IB fabric or receiving the at least one SMP destined for the host.

Said method further comprises including SMP firewall component in the secure firmware implementation.

Said method further comprises allowing the SMP firewall component to prevent one or more SMP based operations.

Said method further comprises allowing the SMP firewall component to prevent SMP based communication between host software and a subnet manager.

Said method further comprises implementing special rules as part of the SMP firewall component.

Said method further comprises allowing the special rules to define that specific SMP based request and response types are sent and received with a tightly controlled rate, and/or define source and destination restrictions for both direct route SMPs and local identifier route SMPs.

Said method further comprises allowing the secure firmware implementation to include a proxy function, wherein the proxy function can receive communications with the host software through a local out of band interface.

In general, the invention relates to a system for preventing subnet management packet (SMP) based attacks, comprising:
means for receiving at least one SMP via the secure firmware implementation, wherein the at least one SMP is either received from a host or destined for a host; and
means for preventing, via the secure firmware implementation, the host from sending the at least one SMP to an IB fabric or receiving the at least one SMP destined for the host.

Said system further comprises means for including SMP firewall component in the secure firmware implementation.

Said system further comprises means for allowing the SMP firewall component to prevent one or more SMP based operations.

Said system further comprises means for allowing the SMP firewall component to prevent SMP based communication between host software and a subnet manager.

Said system further comprises means for implementing special rules as part of the SMP firewall component.

Said system further comprises means for allowing the special rules to define that specific SMP based request and response types are sent and received with a tightly controlled rate, and/or define source and destination restrictions for both direct route SMPs and local identifier route SMPs.

Said system further comprises means for allowing the secure firmware implementation to include a proxy function, wherein the proxy function can receive communications with the host software through a local out of band interface.

In general, the invention relates to a method for providing switch based subnet management packet (SMP) traffic protection in a middleware machine environment operable on one or more microprocessors, comprising:
means for receiving, via a network switch, one or more SMPs destined for a subnet management agent (SMA) component;
means for checking, via the network switch, whether the one or more SMPs include a correct management key; and
means for preventing, via the network switch, the one or more SMPs from being forwarded to the destined SMA component when the one or more SMPs do not include the correct management key.

Said system further comprises means for filtering the one or more SMPs according to a fabric policy.

Said system further comprises means for allowing each of the one or more SMPs to be a direct route SMP.

Said system further comprises means for allowing a subnet manager to use one or more SMPs to communicate with a subnet management agent (SMA) component via a particular switch port on the network switch.

Said system further comprises means for defining a different management key for each external port on the network switch.

Said system further comprises means for allowing the network switch to enforce separate restrictions on SMPs sent from an external port to the SMA component and SMPs received at the external port from the SMA component.

Said system further comprises means for ensuring, via a subnet manager, that a untrusted remote host channel adapter (HCA) associated with the SMA component can only send out one or more SMPs when a correct management key is specified.

Said system further comprises means for specifying an SMP rate that defines how fast a remote HCA port is allowed to generate SMPs.

Said system further comprises means for declaring one or more switch ports to be trusted and allowing
SMP requests to be sent from the trusted ports, and
SMP responses to be received at the trusted ports.

Said system further comprises means allowing only SMA component requests to be sent to an untrusted port from the trusted ports.

In general, the invention relates to a network switch running on one or more microprocessors, comprising:
means for receiving one or more SMPs destined for a subnet management agent (SMA) component;
means for checking whether the one or more SMPs include a correct management key; and
means for preventing the one or more SMPs from being forwarded to the destined SMA component when at least one SMP does not include the correct management key.

The present invention may be conveniently implemented using one or more conventional general purpose or specialized digital computer, computing device, machine, or microprocessor, including one or more processors, memory and/or computer readable storage media programmed according to the teachings of the present disclosure. Appropriate software coding can readily be prepared by skilled programmers based on the teachings of the present disclosure, as will be apparent to those skilled in the software art.

In some embodiments, the present invention includes a computer program product which is a storage medium or computer readable medium (media) having instructions stored thereon/in which can be used to program a computer to perform any of the processes of the present invention. The storage medium can include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data.

The foregoing description of the present invention has been provided for the purposes of illustration and description. It is not intended to be exhaustive or to limit the invention to the precise forms disclosed. Many modifications and variations will be apparent to the practitioner skilled in the art. The embodiments were chosen and described in order to best explain the principles of the invention and its practical application, thereby enabling others skilled in the art to understand the invention for various embodiments and with various modifications that are suited to the particular use contemplated. It is intended that the scope of the invention be defined by the following claims and their equivalence.

## Claims

1. A method for providing subnet management packet, SMP, firewall restrictions in a middleware machine environment (200) operating on one or more microprocessors, comprising:
providing a secure firmware implementation (215, 216) on a host channel adaptor, HCA, (211, 212) that connects to an infiniband, IB, fabric (210), wherein the HCA is associated with a host (203, 204);
receiving at least one SMP via the secure firmware implementation, wherein the at least one SMP is either received from the host or destined for the host;
preventing, via the secure firmware implementation, the host from sending the at least one SMP to the IB fabric or receiving the at least one SMP destined for the host;
including a proxy function (217, 218) in the secure firmware implementation, wherein the proxy function can communicate with software on the host through a local out-of-band interface; and
allowing a subnet manager (201) component associated with the IB fabric (210) to send SMPs to the host software via the proxy function.

2. The method according to Claim 1, further comprising:
including a SMP firewall component (213, 214) in the secure firmware implementation.

3. The method according to Claim 2, further comprising:
allowing the SMP firewall component to prevent one or more SMP based operations.

4. The method according to Claim 2 or 3, further comprising:
allowing the SMP firewall component to prevent SMP based communication between software on the host and the subnet manager.

5. The method according to any of Claims 2 to 4, further comprising:
implementing special rules as part of the SMP firewall component.

6. The method according to Claim 5, further comprising:
allowing the special rules to define that specific SMP based request and response types are sent and received with a tightly controlled rate, and/or define source and destination restrictions for both direct route SMPs and local identifier route SMPs.

7. The method according to any preceding Claim, further comprising:
preventing unauthorized retrieval of configuration information from remote IB nodes.

8. The method according to any of Claims 1 to 6, further comprising:
allowing the proxy function to be responsible for implementing specific legal operations on behalf of the host stack software (205, 206).

9. A system for providing subnet management packet, SMP, firewall restrictions in a middleware machine environment (200) operating on one or more microprocessors, comprising:
one or more hosts (203, 204), with which a host channel adaptor, HCA, (211, 212) is associated; wherein said HCA (211,212) connects to an infiniband IB fabric (210); and
a secure firmware implementation (215, 216) on the HCA, and
wherein the secure firmware implementation operates to:
receive at least one SMP from the host or destined for the host; and
prevent the host from sending or receiving the at least one SMP;
wherein the secure firmware implementation includes a proxy function (217, 218), wherein the proxy function can communicate with software on the host through a local out-of-band interface;
and wherein a subnet manager (201) component associated with the IB fabric (210) is allowed to send SMPs to the host software (205, 206) via the proxy function.

10. The system according to Claim 9, wherein:
the secure firmware implementation includes an SMP firewall component (213, 214), wherein the SMP firewall component can prevent one or more SMP based operations.

11. The system according to Claim 10, wherein:
the SMP firewall component can prevent SMP based communication between software on the host and the subnet manager (201).

12. The system according to Claim 10 or 11, further comprising:
special rules that are implemented as part of the SMP firewall component, wherein the special rules allow specific SMP based request and response types to be sent and received at a tightly controlled rate, and/or define source and destination restrictions for both direct route SMPs and local ID route SMPs.

13. A computer program comprising instructions for execution by one or more processors to perform the method of any of Claims 1 to 8.

## Patentansprüche

1. Verfahren zum Bereitstellen von Teilnetzverwaltungspaket- bzw. SMP-Firewalleinschränkungen in einer Middleware-Maschinen-Umgebung (200), die in einem oder mehreren Mikroprozessoren betrieben wird, umfassend:
Bereitstellen einer sicheren Firmware-Implementierung (215, 216) in einem Hostkanaladapter, HCA, (211, 212), der mit einem Inifiband- bzw. IB-Gefüge (210) verbindet, wobei der HCA mit einem Host (203, 204) assoziiert ist;
Empfangen mindestens eines SMP über die sichere Firmware-Implementierung, wobei das mindestens eine SMP entweder von dem Host empfangen wird oder für den Host bestimmt ist;
Verhindern, über die sichere Firmware-Implementierung, dass der Host das mindestens eine SMP an das IB-Gefüge sendet oder das mindestens eine SMP, das für den Host bestimmt ist, empfängt;
Enthalten einer Proxyfunktion (217, 218) in der sicheren Firmware-Implementierung, wobei die Proxyfunktion mit Software in dem Host durch eine lokale Außerhalb-des-Bandes-Schnittstelle kommunizieren kann; und
Zulassen, dass eine mit dem IB-Gefüge (210) assoziierte Komponente des Teilnetzmanagers (201) SMPs an die Host-Software über die Proxyfunktion sendet.

2. Verfahren nach Anspruch 1, ferner umfassend:
Enthalten einer SMP-Firewall-Komponente (213, 214) in der sicheren Firmware-Implementierung.

3. Verfahren nach Anspruch 2, ferner umfassend:
Zulassen, dass die SMP-Firewall-Komponente eine oder mehrere SMP-basierte Operationen verhindert.

4. Verfahren nach Anspruch 2 oder 3, ferner umfassend:
Zulassen, dass die SMP-Firewall-Komponente SMP-basierte Kommunikation zwischen Software in dem Host und dem Teilnetzmanager verhindert.

5. Verfahren nach einem der Ansprüche 2 bis 4, ferner umfassend:
Implementieren spezieller Regeln als Teil der SMP-Firewall-Komponente.

6. Verfahren nach Anspruch 5, ferner umfassend:
Zulassen, dass die speziellen Regeln definieren, dass spezifische SMP-basierte Anforderungs- und Antworttypen mit einer streng gesteuerten Rate gesandt und empfangen werden und/oder Ausgangs- und Bestimmungseinschränkungen für sowohl Direktrouten-SMPs als auch Lokalkennungsrouten-SMPs definieren.

7. Verfahren nach einem der vorstehenden Ansprüche, ferner umfassend:
Verhindern von nicht autorisiertem Abrufen von Konfigurationsinformationen von entfernten IB-Knoten.

8. Verfahren nach einem der Ansprüche 1 bis 6, ferner umfassend:
Zulassen, dass die Proxyfunktion zum Implementieren spezifischer gesetzlicher Operationen im Namen der Hoststapel-Software (205, 206) verantwortlich ist.

9. System zum Bereitstellen von Teilnetzverwaltungspaket- bzw. SMP-Firewalleinschränkungen in einer Middleware-Maschinen-Umgebung (200), die in einem oder mehreren Mikroprozessoren betrieben wird, umfassend:
einen oder mehrere Hosts (203, 204), mit denen ein Hostkanaladapter, HCA, (211, 212) assoziiert ist;
wobei der HCA (211, 212) mit einem Infiniband- bzw. IB-Gefüge(210) verbindet; und
eine sichere Firmware-Implementierung (215, 216) in dem HCA, und
wobei die sichere Firmware-Implementierung betrieben wird zum:
Empfangen mindestens eines SMP von dem Host oder bestimmt für den Host; und
Verhindern, dass der Host das mindestens eine SMP sendet oder empfängt;
wobei die sichere Firmware-Implementierung eine Proxyfunktion (217, 218) enthält, wobei die Proxyfunktion mit Software in dem Host durch eine lokale Außerhalb-des-Bandes-Schnittstelle kommunizieren kann;
und wobei einer mit dem IB-Gefüge (210) assoziierten Komponente des Teilnetzmanagers (201) gestattet ist, SMPs an die Host-Software (205, 206) über die Proxyfunktion zu senden.

10. System nach Anspruch 9, wobei:
die sichere Firmware-Implementierung eine SMP-Firewall-Komponente (213, 214) enthält, wobei die SMP-Firewall-Komponente eine oder mehrere SMP-basierte Operationen verhindern kann.

11. System nach Anspruch 10, wobei:
die SMP-Firewall-Komponente SMP-basierte Kommunikation zwischen Software in dem Host und dem Teilnetzmanager (201) verhindern kann.

12. System nach Anspruch 10 oder 11, ferner umfassend:
spezielle Regeln, die als Teil der SMP-Firewall-Komponente implementiert sind, wobei die speziellen Regeln gestatten, dass spezifische SMP-basierte Anforderungs- und Antworttypen bei einer streng gesteuerten Rate gesandt und empfangen werden und/oder Ausgangs- und Bestimmungseinschränkungen für sowohl Direktrouten-SMPs als auch Lokalkennungsrouten-SMPs definieren.

13. Computerprogramm, umfassend Anweisungen zur Ausführung durch einen oder mehrere Prozessoren zum Durchführen des Verfahrens nach einem der Ansprüche 1 bis 8.

## Revendications

1. Procédé pour fournir des restrictions de pare-feu de paquet de gestion de sous-réseau, SMP, dans un environnement de machine intergicielle (200) fonctionnant sur un ou plusieurs microprocesseurs, comprenant les étapes suivantes :
fournir une implémentation sécurisée de micrologiciel (215, 216) sur un adaptateur de canal hôte, HCA, (211, 212) connecté à un tissu (210) InfiniBand, IB, où le HCA est associé à un hôte (203, 204) ;
recevoir au moins un SMP par l'intermédiaire de l'implémentation sécurisée de micrologiciel, où l'au moins un SMP est soit reçu de l'hôte, soit destiné à l'hôte ;
empêcher, par l'intermédiaire de l'implémentation sécurisée de micrologiciel, l'hôte d'envoyer l'au moins un SMP au tissu IB ou de recevoir l'au moins un SMP destiné à l'hôte ;
inclure une fonction de mandataire (217, 218) dans l'implémentation sécurisée de micrologiciel, où la fonction de mandataire peut communiquer avec le logiciel sur l'hôte par l'intermédiaire d'une interface locale hors bande ; et
permettre à un composant gestionnaire de sous-réseau (201) associé au tissu IB (210) d'envoyer des SMP au logiciel hôte par l'intermédiaire de la fonction de mandataire.

2. Procédé selon la revendication 1, comprenant en outre l'étape suivante :
inclure un composant pare-feu SMP (213, 214) dans l'implémentation sécurisée de micrologiciel.

3. Procédé selon la revendication 2, comprenant en outre l'étape suivante :
permettre au composant pare-feu SMP d'empêcher une ou plusieurs opérations basées sur SMP.

4. Procédé selon la revendication 2 ou la revendication 3, comprenant en outre l'étape suivante :
permettre au composant pare-feu SMP d'empêcher la communication basée sur SMP entre le logiciel de l'hôte et le gestionnaire de sous-réseau.

5. Procédé selon l'une quelconque des revendications 2 à 4, comprenant en outre l'étape suivante :
implémenter des règles spéciales dans le cadre du composant pare-feu SMP.

6. Procédé selon la revendication 5, comprenant en outre l'étape suivante :
permettre aux règles spéciales de définir que des types de demandes et de réponses spécifiques basées sur SMP sont envoyés et reçus à un taux étroitement contrôlé, et/ou de définir des restrictions de source et de destination à la fois pour les SMP de route directe et les SMP de route à identificateur local.

7. Procédé selon l'une quelconque des revendications précédentes, comprenant en outre l'étape suivante :
empêcher la récupération non autorisée d'informations de configuration à partir de noeuds IB distants.

8. Procédé selon l'une quelconque des revendications 1 à 6, comprenant en outre l'étape suivante :
permettre à la fonction de mandataire d'être responsable de l'implémentation d'opérations juridiques spécifiques pour le compte du logiciel de la pile hôte (205, 206) .

9. Système pour fournir des restrictions de pare-feu de paquet de gestion de sous-réseau, de SMP, dans un environnement de machine intergicielle (200) fonctionnant sur un ou plusieurs microprocesseurs, comprenant :
un ou plusieurs hôtes (203, 204), auxquels un adaptateur de canal hôte, HCA, (211, 212) est associé ;
où ledit HCA (211, 212) est connecté à un tissu InfiniBand, IB, (210) ; et
une implémentation sécurisée de micrologiciel (215, 216) sur le HCA, et
où l'implémentation sécurisée de micrologiciel opère pour :
recevoir au moins un SMP depuis l'hôte ou à destination de l'hôte ; et
empêcher l'hôte d'envoyer ou de recevoir l'au moins un SMP ;
où l'implémentation sécurisée de micrologiciel comprend une fonction de mandataire (217, 218), où la fonction de mandataire peut communiquer avec le logiciel sur l'hôte par l'intermédiaire d'une interface locale hors bande ;
et où un composant gestionnaire de sous-réseau (201) associé au tissu IB (210) est autorisé à envoyer des SMP au logiciel hôte (205, 206) par l'intermédiaire de la fonction de mandataire.

10. Système selon la revendication 9, dans lequel :
l'implémentation sécurisée de micrologiciel comprend un composant pare-feu SMP (213, 214), où le composant pare-feu SMP peut empêcher une ou plusieurs opérations basées sur SMP.

11. Système selon la revendication 10, dans lequel :
le composant pare-feu SMP peut empêcher la communication basée sur SMP entre le logiciel de l'hôte et le gestionnaire de sous-réseau (201).

12. Système selon la revendication 10 ou la revendication 11, comprenant en outre :
des règles spéciales qui sont mises en oeuvre dans le cadre du composant pare-feu SMP, où les règles spéciales permettent d'envoyer et de recevoir des types de demandes et de réponses spécifiques basées sur SMP à un taux étroitement contrôlé, et/ou définissent des restrictions de source et de destination à la fois pour les SMP de route directe et les SMP de route à identificateur local.

13. Programme d'ordinateur comprenant des instructions d'exécution par un ou plusieurs processeurs pour exécuter le procédé de l'une quelconque des revendications 1 à 8.
